# DEMANDE DE BREVET EUROPEEN

(11) **EP 0 896 491 A1**
(43) Date de publication de la demande: **10.02.1999**
(21) Numéro de dépôt: 98401878.8
(22) Date de dépôt: 23.07.1998
(51) Int. Cl.: H04Q 7/32, H04M 1/00

(54) **Procédé d'affichage graphique par un terminal mobile de radio-communication piloté par un module d'identification d'abonné, module d'identification d'abonné et terminal mobile correspondants**

(30) Priorité: 04.08.1997 FR 9709951
(71) Demandeur: ALCATEL ALSTHOM COMPAGNIE GENERALE D'ELECTRICITE, 75008 Paris (FR)
(72) Inventeur: Choquet, Christophe, 75015 Paris (FR); Hubbe, Pascal, 75014 Paris (FR); Lelong-Gilbert, Anne-Gaelle, 78220 Viroflay (FR)
(74) Mandataire: Lamoureux, Bernard

(57) **Abrégé**

L'invention concerne un procédé d'affichage graphique par un terminal mobile coopérant avec et piloté par un module d'identification d'abonné, comprenant les étapes suivantes :
- émission (31) par ledit module d'identification d'abonné (10), à destination dudit terminal (20), d'une commande d'affichage graphique ;
- réception et exécution (32) par ledit terminal (20) de ladite commande d'affichage graphique, de façon à afficher au moins un élément d'image sur au moins un moyen (24) d'affichage graphique dudit terminal (20).

L'invention concerne également un module d'identification d'abonné et un terminal mobile de radio-communication correspondants.

## Description

Le domaine de l'invention est celui des systèmes de radio-communications et notamment. mais non exclusivement, des systèmes tels que le GSM" (pour "Global System for Mobile communications" en anglais) et le "DCS" 1800 (pour "Digital Cellular System" en anglais).

D'une façon générale, dans un tel système, l'usager dispose d'une station mobile constituée d'un terminal mobile qui coopère avec un module d'identification d'abonné (ou carte "SIM", pour "Subscriber Identity Module" en anglais, dans le standard GSM). Généralement, la carte SIM est une carte à puce destinée à être insérée dans un terminal mobile pour en permettre l'utilisation. La communication entre le module d'identification d'abonné et le terminal mobile est assurée par une liaison filaire, par opposition à une liaison radioélectrique. On entend notamment par liaison filaire les liaisons sur circuit imprimé ou analogue.

Plus précisément, l'invention concerne un procédé permettant d'afficher un ou plusieurs éléments d'image sur un moyen d'affichage graphique d'un terminal mobile piloté par un module d'identification d'abonné.

De façon classique, les terminaux mobiles offrent certaines facilités permettant notamment d'accéder à des services. Ces facilités offertes sont par exemple :
- la possibilité de stockage de données de type répertoires téléphoniques, permettant de faciliter l'accès aussi bien à des services dits de base, qu'à des services dits à valeur ajoutée opérateur (tels que notamment des services interactifs) ;
- la possibilité d'effectuer des opérations sur des services dits supplémentaires (tels que par exemple le renvoi d'appels, l'interdiction d'appels sortants,...);
- dans le cas de réseaux de radiomobiles offrant un service de téléphonie, la fourniture d'un service de transmission de messages alphanumériques courts, ainsi que la possibilité de stockage de messages alphanumériques courts à émettre, ou à recevoir, par les terminaux mobiles.

A l'origine, les données liées à de telles facilités étaient stockées dans le terminal mobile même. Par la suite, pour obtenir plus de souplesse, il a été proposé d'effectuer ce stockage dans le module d'identification d'abonné.

Ainsi, la recommandation GSM 11.11 préconise que les données liées aux facilités soient, comme les données liées à l'identification d'abonné, stockées dans des zones de mémoire prédéfinies de la carte SIM, de manière à assurer une compatibilité de cette carte avec les divers types de terminaux mobiles GSM susceptibles de la recevoir.

Grâce à la norme de télécommunication européenne (ou "ETS" pour "European Telecommunication Standard" en anglais), l'interface entre le module d'identification d'abonné et le terminal mobile assure l'interopérabilité entre ces deux éléments, indépendamment des constructeurs respectifs et des opérateurs. Ainsi, il est possible de bénéficier des facilités à partir de n'importe quel terminal mobile susceptible de coopérer avec un tel module d'identification d'abonné.

Cependant, un inconvénient majeur subsiste. En effet, actuellement un terminal piloté par un module d'identification d'abonné n'est pas en mesure d'afficher un élément d'image.

L'invention a notamment pour objectif de pallier cet inconvénient majeur de l'état de la technique.

Plus précisément, l'un des objectifs de la présente invention est de fournir un procédé d'affichage sur un moyen d'affichage graphique d'un terminal mobile de radio-communication piloté par un module d'identification d'abonné. L'invention a également comme objectif de fournir un module d'identification d'abonné et un terminal mobile permettant la mise en oeuvre d'un tel procédé.

Un objectif complémentaire de l'invention est de fournir un tel procédé, un tel module d'identification d'abonné et un tel terminal mobile permettant d'optimiser l'utilisation des ressources disponibles sur le terminal mobile employé.

Un autre objectif complémentaire de l'invention est de fournir un tel procédé, un tel module d'identification d'abonné et un tel terminal mobile permettant de s'affranchir des différents types de terminaux mobiles utilisés.

Ces différents objectifs, ainsi que d'autres qui apparaîtront par la suite, sont atteints selon l'invention à l'aide d'un procédé d'affichage graphique par un terminal mobile coopérant avec et piloté par un module d'identification d'abonné au moyen d'une liaison filaire. Ce procédé comprend les étapes suivantes:
- émission par ledit module d'identification d'abonné, à destination dudit terminal, d'une commande d'affichage graphique ;
- réception et exécution par ledit terminal de ladite commande d'affichage graphique, de façon à afficher au moins un élément d'image sur au moins un moyen d'affichage graphique dudit terminal.

Le principe général de l'invention repose donc sur l'ajout d'une commande d'affichage graphique permettant à un terminal mobile d'afficher au moins un élément d'image sur au moins un moyen d'affichage graphique utilisé par le terminal mobile.

Cette commande complémentaire permet au module d'identification d'abonné d'utiliser au mieux les capacités du terminal mobile employé.

La commande d'affichage graphique, qui est stockée dans le module d'identification d'abonné, peut être liée au type de terminal avec lequel le module d'identification d'abonné est destiné à coopérer.

Il est clair que la commande d'affichage graphique peut concerner une combinaison d'un ou plusieurs types d'éléments d'image et d'un texte à afficher sur au moins un moyen d'affichage graphique du terminal.

Il est clair que le module d'identification d'abonné peut envoyer différentes commandes successives d'affichage graphique à différents moments, de façon à afficher notamment différents types d'éléments d'image et/ou différents éléments d'image d'un type prédéterminé.

Selon un mode de réalisation préférentiel de l'invention, ledit procédé comprend en outre au moins une des étapes appartenant au groupe suivant :
- émission par ledit terminal et réception par ledit module d'identification d'abonné d'au moins un premier message de prise en compte de ladite commande d'affichage graphique ;
- émission par ledit terminal et réception par ledit module d'identification d'abonné d'au moins un second message de fin d'exécution de ladite commande d'affichage graphique.

Ainsi, le terminal informe le module d'identification d'abonné du devenir de la commande d'affichage graphique que ce dernier lui a envoyée. Le premier message (de prise en compte) s'avère utile notamment dans le cas où le terminal ne peut exécuter la commande d'affichage graphique après réception de celle-ci par exemple suite à un traitement de commande(s) prioritaire(s) et/ou en cours. Par ailleurs, le second message (de fin d'exécution) indique que le terminal est prêt notamment pour exécuter une autre commande, par exemple une commande d'affichage graphique différente de la précédente, permettant d'afficher un autre type d'élément d'image.

Avantageusement, ledit au moins un élément d'image appartient au groupe comprenant :
- les logos ;
- les graphiques à affichage direct des pixels ;
- les images et/ou portions d'images ;
- les icônes ;
- les graphiques ;
- les dessins.

Cette liste est bien sûr non limitative.

Il est à noter que l'invention n'impose aucune contrainte sur le nombre, la forme et la nature du ou des éléments d'image à afficher. De même, l'invention n'impose aucune contrainte sur le nombre et la nature du ou des moyens d'affichage graphique utilisé(s) par le terminal mobile.

En d'autres termes, la commande d'affichage graphique peut afficher un type d'élément d'image précis ou une combinaison de ces différents types d'éléments d'image et peut s'adresser à un seul ou une pluralité de moyens d'affichage graphique utilisé(s) par le terminal.

De façon avantageuse, ladite commande d'affichage graphique est une commande supplémentaire du jeu de commandes du protocole de dialogue entre ledit terminal et ledit module d'identification d'abonné.

De façon avantageuse, ledit procédé comprend une étape préalable de détermination du type d'affichage, à savoir notamment graphique ou non, qu'utilise ledit terminal avec lequel coopère ledit module d'identification d'abonné.

Ainsi, cela évite au module d'identification d'abonné d'envoyer inutilement une commande qui ne peut être reconnue par le ou les moyens d'affichage graphique utilisé(s) par le terminal mobile. L'étape préalable correspond par exemple à une étape d'initialisation ou à une étape effectuée à tout autre moment, notamment quand le module d'identification d'abonné a besoin d'afficher au moins un élément d'image. La connaissance de la capacité du terminal à exécuter la commande d'affichage graphique est intéressante. Cela est vrai notamment avant que le module d'identification d'abonné n'envoie à destination du terminal une commande destinée à mettre en oeuvre le ou les moyens d'affichage graphique dont on a déterminé le type d'affichage graphique que ce(s) moyens d'affichage graphique accepte(nt).

Selon une variante avantageuse, ladite étape préalable comprend elle-même les étapes suivantes :
- émission par ledit module d'identification d'abonné, à destination dudit terminal, d'une commande d'acquisition du type d'affichage dudit terminal ;
- en retour, émission par ledit terminal, à destination dudit module d'identification d'abonné, d'une réponse contenant le type d'affichage, à savoir notamment graphique ou non, dudit terminal.

Ainsi, le module d'identification d'abonné sait s'il peut envoyer au terminal la commande d'affichage graphique.

L'invention concerne également un module d'identification d'abonné du type destiné à piloter, par liaison filaire, un terminal mobile de radio-communication avec lequel il coopère. Ce module d'identification d'abonné comprend des moyens d'émission vers ledit terminal d'une commande d'affichage graphique, l'exécution de ladite commande d'affichage graphique par ledit terminal permettant d'afficher au moins un élément d'image sur au moins un moyen d'affichage graphique dudit terminal.

Ainsi, le module d'identification d'abonné est adapté pour pouvoir exécuter le procédé précité d'affichage d'au moins un élément d'image sur au moins un moyen d'affichage graphique d'un terminal mobile de radio-communication avec lequel coopère le module d'identification d'abonné.

En outre, les moyens supplémentaires du module d'identification d'abonné sont simples à mettre en oeuvre, peu coûteux et ne nécessitent aucune restructuration profonde par rapport au module d'identification d'abonné connu.

De façon avantageuse, ledit module d'identification d'abonné comprend au moins certains des moyens appartenant au groupe comprenant :
- des moyens de stockage temporaire de ladite commande d'affichage graphique ;
- des moyens de réception d'au moins un premier message de prise en compte de ladite commande d'affichage graphique par ledit terminal ;
- des moyens de réception d'au moins un second message de fin d'exécution de ladite commande d'affichage graphique par ledit terminal.

Ainsi, cela permet de stocker la ou les commandes d'affichage graphique que le(s) moyen(s) d'affichage graphique du terminal mobile peu(ven)t utiliser. De cette manière, le module d'identification d'abonné peut venir récupérer cette ou ces commandes au moment opportun, notamment avant chaque envoi d'une commande fonction du type du moyen d'affichage graphique à mettre en oeuvre et/ou du ou des éléments d'image à afficher.

Il est clair que le module d'identification d'abonné de l'invention peut disposer d'une bibliothèque, qui regroupe toutes les commandes d'affichage graphique utilisées par différents types de moyens d'affichage graphique que peuvent utiliser différents terminaux. De cette manière, suite à un marquage quelconque du ou des type(s) de moyen d'affichage graphique que le terminal mobile utilise, après l'étape préalable de détermination du type d'affichage, le module d'identification d'abonné s'interdit d'envoyer les commandes d'affichage graphique que le terminal ne peut exécuter.

L'invention concerne également un terminal mobile de radio-communication du type destiné à être piloté, par liaison filaire, par un module d'identification d'abonné avec lequel il coopère. Ce terminal mobile comprend :
- des moyens de réception d'une commande d'affichage graphique émise par ledit module d'identification d'abonné ;
- des moyens d'exécution de ladite commande d'affichage graphique, de façon à afficher au moins un élément d'image sur au moins un moyen d'affichage graphique dudit terminal.

Ainsi, le terminal mobile de l'invention est capable de recevoir, analyser, reconnaître, et exécuter une commande d'affichage graphique.

Il est clair que l'invention n'impose aucune contrainte quant à la durée nécessaire pour réaliser ces différentes opérations.

De même, l'invention n'impose aucune contrainte quant à un éventuel arrêt des tâches que le terminal est en train d'exécuter au moment de la réception de la commande d'affichage graphique.

Selon un mode de réalisation préférentiel de l'invention, ledit terminal comprend au moins certains des moyens appartenant au groupe comprenant :
- des moyens d'émission vers ledit module d'identification d'abonné d'au moins un premier message de prise en compte de ladite commande d'affichage graphique ;
- des moyens d'émission vers ledit module d'identification d'abonné d'au moins un second message de fin d'exécution de ladite commande d'affichage graphique.

Ainsi, cela permet de tenir au courant le module d'identification d'abonné de l'état du terminal dans le traitement de la commande d'affichage graphique qu'il a émise.

D'autres caractéristiques et avantages de l'invention apparaîtront à la lecture de la description suivante d'un mode de réalisation préférentiel de l'invention, donné à titre de simple exemple indicatif et non limitatif, et des dessins annexés, dans lesquels :
- la figure 1 présente un schéma simplifié d'un mode de réalisation particulier d'un module d'identification d'abonné selon l'invention ;
- la figure 2 présente un schéma simplifié d'un mode de réalisation particulier d'un terminal mobile selon l'invention, destiné à être piloté par le module d'identification d'abonné de la figure 1 ;
- la figure 3 est un organigramme simplifié d'un mode de réalisation particulier du procédé selon l'invention.

Dans la suite de la description, on se place dans le cas particulier d'un système de radiocommunication selon le standard GSM. Il est clair que l'homme du métier saura étendre les principes évoqués ci-dessous à d'autres types de systèmes de radiocommunication.

L'invention concerne donc un procédé permettant d'afficher au moins un élément d'image sur au moins un moyen d'affichage graphique d'un terminal mobile piloté par un SIM, avec lequel il coopère. L'invention concerne également le SIM et le terminal permettant la mise en oeuvre de ce procédé.

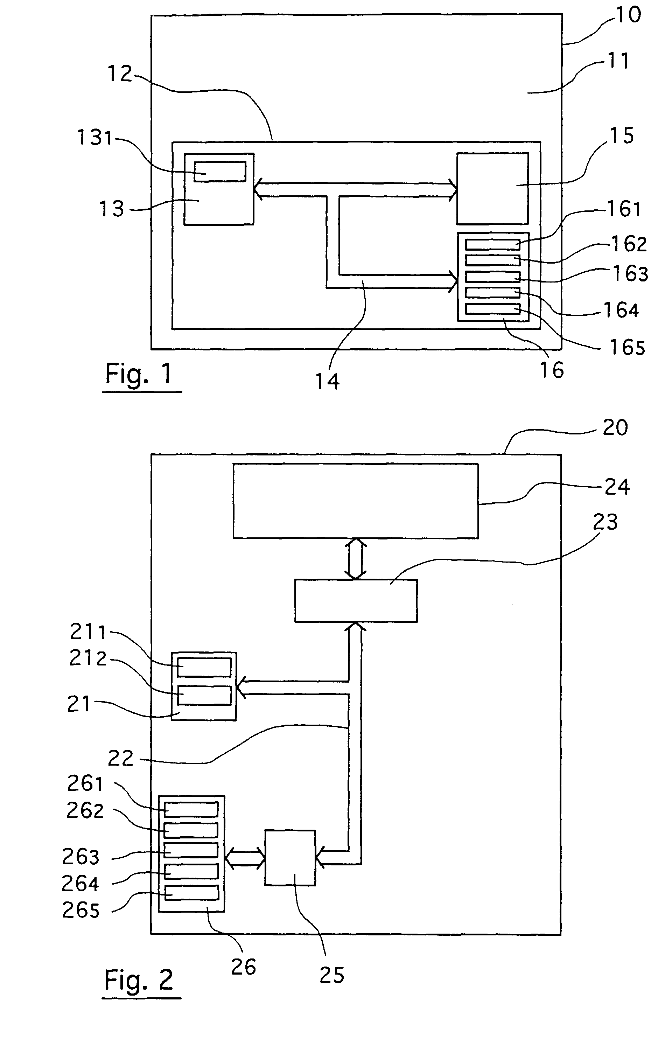

On présente maintenant, en relation avec le schéma simplifié de la figure 1, un SIM (ou plus généralement un module d'identification d'abonné) selon l'invention.

Ce SIM 10 est constitué notamment d'un support 11, qui porte une puce semi-conductrice 12. Celle-ci comprend notamment des moyens 13 de traitement et de gestion des données (par exemple un microprocesseur), organe central de décision qui pilote via un bus bi-directif 14 les autres moyens de la puce 12 (partiellement représentés 15, 16).

Sur la puce 12, des moyens de stockage de données 15 permettent de stocker, au moins temporairement, notamment une ou plusieurs commande(s) d'affichage graphique destinée(s) au(x) moyen(s) d'affichage graphique du terminal. La commande d'affichage graphique est employée pour afficher au moins un élément d'image sur au moins un moyen d'affichage graphique utilisé par le terminal.

Par ailleurs, la puce 12 comprend des moyens 16 de coopération destinés à coopérer avec des moyens de coopération associés (tel qu'un lecteur 26 cf figure 2) prévus sur le terminal. Ces moyens 16 de coopération comprennent notamment des moyens 161 d'émission vers le terminal d'une commande d'affichage graphique, des moyens 162 de réception d'au moins un message de prise en compte de la commande d'affichage graphique issu du terminal. Ce message de prise en compte de la commande d'affichage graphique indique au SIM que le terminal a effectivement enregistré la commande d'affichage graphique et l'exécutera. De plus, les moyens 16 de coopération comprennent notamment des moyens 163 de réception d'au moins un second message de fin d'exécution de la commande d'affichage graphique par le terminal. Ce message de fin d'exécution de la commande d'affichage graphique indique au SIM que le terminal a exécuté la commande d'affichage graphique. De cette manière, le terminal est capable de recevoir une autre commande, par exemple une autre commande d'affichage graphique.

En outre, optionnellement, les moyens 16 de coopération comprennent des moyens 164 d'émission d'une commande d'acquisition du type d'affichage utilisé par le terminal et des moyens 165 de réception d'une réponse contenant le type d'affichage du terminal. Dans ce cas, les moyens 13 de traitement et de gestion des données comprennent en outre des moyens 131 d'adaptation du fonctionnement du SIM en fonction du type d'affichage graphique utilisé par le(s) moyen(s) d'affichage graphique du terminal, c'est-à-dire en fonction de la réponse à la commande précitée d'acquisition du type d'affichage.

Dans l'exemple présenté sur la figure 2, le terminal 20 de l'invention comprend des moyens 21 de traitement et de gestion des données (par exemple un microprocesseur), organe central de décision qui pilote via un bus bi-directif22 les autres moyens du terminal.

Selon l'invention, ces moyens 21 de traitement et de gestion des données comprennent notamment des moyens 211 d'exécution d'une commande d'affichage graphique sur le(s) moyen(s) 24 d'affichage graphique utilisé(s) par le terminal. Ces moyens 211 d'exécution d'une commande d'affichage graphique permettent notamment d'afficher un ou des éléments d'image sur ce(s) moyen(s) 24 d'affichage graphique. De plus, ces moyens 21 de traitement et de gestion des données comprennent des moyens 212 d'exécution d'une commande d'acquisition du type d'affichage permettant de générer une réponse contenant le type d'affichage utilisé par le(s) moyen(s) 24 d'affichage du terminal. Le contenu de cette réponse est déterminée éventuellement après avoir recueilli des informations auprès des différents moyens 23 d'interface(s) du ou des moyens 24 d'affichage du terminal.

Les moyens 21 de traitement et de gestion des données commandent notamment différents moyens 23 et 25 d'interface respectivement avec les moyens 24 d'affichage graphique et le lecteur 26 de SIM. Ce lecteur 26 de SIM comprend notamment des moyens 261 de réception d'une commande d'affichage graphique et des moyens 262 de réception d'une commande d'acquisition du type d'affichage utilisé par le terminal. De plus, le lecteur 26 comprend des moyens 263 d'émission d'un premier message de prise en compte de la commande d'affichage graphique et des moyens 264 d'émission d'un second message de fin d'exécution de la commande d'affichage graphique. Ce lecteur 26 comprend encore des moyens 265 d'émission d'une réponse contenant le type d'affichage utilisé par le terminal (réponse à la commande précitée d'acquisition du type d'affichage utilisé par le terminal).

Selon les recommandations GSM 11.11 et 11.14, on utilise un jeu de commandes pour l'application du SIM (ou "SIM Application Toolkit" en anglais). Ce dernier regroupe un ensemble d'applications et de procédures associées pouvant être utilisé durant une session GSM. Ce "SIM Application Toolkit" présente notamment la façon dont un SIM peut interagir et opérer avec un terminal quelconque et incorpore à cet effet les mécanismes spécifiques requis par une application.

En particulier, dans le cadre du "SIM Application Toolkit", il est prévu que le SIM stocke dans un fichier appelé "SIM Service Table" une information qui indique qu'il sait envoyer au terminal des commandes, appartenant au groupe appelé "Proactive SIM", que le SIM peut faire exécuter par le terminal (si ce dernier est adapté en ce sens). Après une lecture du SIM Service Table, le terminal signale au SIM par une commande appelée "Terminal Profile" la liste des commandes Proactive SIM que le terminal sait exécuter. Parmi les commandes du Proactive SIM, on compte notamment des commandes d'affichage de texte à l'écran (ou "DISPLAY TEXT"en anglais), de sélection d'un article parmi une liste d'articles (ou "SELECT ITEM"en anglais).

Selon l'invention, c'est précisément dans la liste des commandes "Proactive SIM" que vient se rajouter la commande d'affichage graphique. En d'autres termes, la commande de l'invention constitue une commande supplémentaire du jeu de commandes du protocole de dialogue entre le terminal et le SIM.

On rappelle que de façon classique, après qu'il a été mis en coopération avec le terminal, le SIM cherche à savoir ce que le terminal est capable d'effectuer, notamment en terme de commandes. Pour cela, lors d'une étape préalable, un message appelé "Terminal Profile" d'une procédure appelée "Profile Download" est envoyé du terminal vers le SIM. Dans ce message, le terminal indique au SIM la liste des commandes qu'il est capable de reconnaître et d'exécuter. Par conséquent, selon les cas, la commande d'affichage graphique de la présente invention fait ou ne fait pas partie de cette liste.

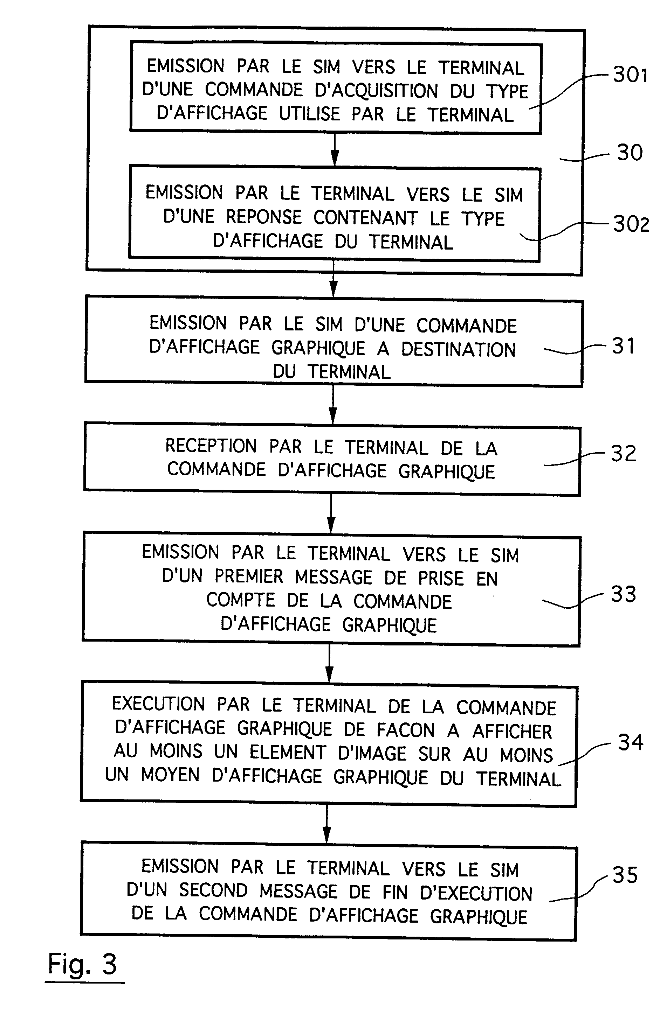

En relation avec l'organigramme de la figure 3, on présente maintenant le procédé selon l'invention d'affichage graphique d'au moins un élément d'image sur au moins un moyen d'affichage graphique utilisé par un terminal piloté par un SIM avec lequel il coopère.

Ce procédé comprend les étapes successives suivantes de la figure 3 :
- le SIM détermine (30) le type d'affichage utilisé par le(s) moyen(s) d'affichage du terminal. Cette étape comprend deux phases successives :
   - le SIM émet (30₁) vers le terminal une commande d'acquisition du type d'affichage utilisé par le terminal ;
   - en retour, le terminal émet (30₂) vers le SIM une réponse contenant le type d'affichage du terminal ;
   - le SIM émet (31) une commande d'affichage graphique vers le terminal ;
   - le terminal reçoit (32) la commande d'affichage graphique ;
- le terminal émet (33) vers le SIM un premier message de prise en compte de la commande d'affichage graphique, de façon à indiquer au SIM que le terminal va exécuter la commande d'affichage graphique ;
- le terminal exécute (34) la commande d'affichage graphique de façon à afficher au moins un élément d'image sur au moins un moyen d'affichage graphique du terminal ;
- le terminal émet (35) vers le SIM un second message de fin d'exécution de la commande d'affichage graphique, de manière à indiquer au SIM que le terminal a exécuté la commande d'affichage graphique.

L'élément d'image à afficher peut être l'un des éléments suivants (ou une combinaison de plusieurs de ceux-ci) : un logo, un graphique à affichage direct des pixels, une images et/ou une portion d'image, une icône, un graphique, un dessin.

Ainsi, le SIM peut choisir la commande à envoyer parmi une pluralité, en fonction du type d'affichage du ou des moyen(s) d'affichage graphique du terminal auquel elle est destinée.

On notera que, bien que la description qui précède corresponde plus particulièrement au cas où la commande d'acquisition d'information(s) d'interface(s) est stockée dans la liste des commandes "Proactive SIM" du SIM, il serait aussi possible de stocker cette commande dans d'autres fichiers du SIM.

## Revendications

1. Procédé d'affichage graphique par un terminal mobile (20) coopérant avec et piloté par un module d'identification d'abonné (10) au moyen d'une liaison filaire, le procédé comprenant les étapes suivantes:
- émission (31) par ledit module d'identification d'abonné (10), à destination dudit terminal (20), d'une commande d'affichage graphique ;
- réception et exécution (32) par ledit terminal (20) de ladite commande d'affichage graphique, de façon à afficher au moins un élément d'image sur au moins un moyen (24) d'affichage graphique dudit terminal (20).

2. Procédé selon la revendication 1, caractérisé en ce qu'il comprend en outre au moins une des étapes appartenant au groupe suivant :
- émission (33) par ledit terminal (20) et réception par ledit module d'identification d'abonné (10) d'au moins un premier message de prise en compte de ladite commande d'affichage graphique ;
- émission (34) par ledit terminal (20) et réception par ledit module d'identification d'abonné (10) d'au moins un second message de fin d'exécution de ladite commande d'affichage graphique.

3. Procédé selon l'une quelconque des revendications 1 et 2, caractérisé en ce que ledit au moins un élément d'image appartient au groupe comprenant :
- les logos ;
- les graphiques à affichage direct des pixels ;
- les images et/ou portions d'images ;
- les icônes ;
- les graphiques ;
- les dessins.

4. Procédé selon l'une quelconque des revendications précédentes, caractérisé en ce que ladite commande d'affichage graphique est une commande supplémentaire du jeu de commandes du protocole de dialogue entre ledit terminal (20) et ledit module d'identification d'abonné (10).

5. Procédé selon l'une quelconque des revendications précédentes, caractérisé en ce qu'il comprend une étape préalable de détermination (30) du type d'affichage, à savoir notamment graphique ou non, qu'utilise ledit terminal (20) avec lequel coopère ledit module d'identification d'abonné (10).

6. Procédé selon l'une quelconque des revendications précédentes, caractérisé en ce que ladite étape préalable comprend elle-même les étapes suivantes:
- émission (30₁) par ledit module d'identification d'abonné (10), à destination dudit terminal (20), d'une commande d'acquisition du type d'affichage dudit terminal (20) ;
- en retour, émission (30₂) par ledit terminal (20), à destination dudit module d'identification d'abonné (10), d'une réponse contenant le type d'affichage, à savoir notamment graphique ou non, dudit terminal (20).

7. Module d'identification d'abonné (10) du type destiné à piloter, par liaison filaire, un terminal mobile de radio-communication (20) avec lequel il coopère, caractérisé en ce qu'il comprend des moyens (161) d'émission vers ledit terminal (20) d'une commande d'affichage graphique, l'exécution de ladite commande d'affichage graphique par ledit terminal (20) permettant d'afficher au moins un élément d'image sur au moins un moyen d'affichage graphique (24) dudit terminal (20).

8. Module d'identification d'abonné (10) selon la revendication 7, caractérisé en ce qu'il comprend au moins certains des moyens appartenant au groupe comprenant :
- des moyens (15) de stockage temporaire de ladite commande d'affichage graphique ;
- des moyens (162) de réception d'au moins un premier message de prise en compte de ladite commande d'affichage graphique par ledit terminal (20) ;
- des moyens (163) de réception d'au moins un second message de fin d'exécution de ladite commande d'affichage graphique par ledit terminal (20).

9. Terminal mobile de radio-communication (20) du type destiné à être piloté, par liaison filaire, par un module d'identification d'abonné (10) avec lequel il coopère, caractérisé en ce qu'il comprend :
- des moyens (261) de réception d'une commande d'affichage graphique émise par ledit module d'identification d'abonné (10) ;
- des moyens (211) d'exécution de ladite commande d'affichage graphique, de façon à afficher au moins un élément d'image sur au moins un moyen d'affichage graphique (24) dudit terminal (20).

10. Terminal selon la revendication 9, caractérisé en ce qu'il comprend au moins certains des moyens appartenant au groupe comprenant :
- des moyens (263) d'émission vers ledit module d'identification d'abonné (10) d'au moins un premier message de prise en compte de ladite commande d'affichage graphique ;
- des moyens (264) d'émission vers ledit module d'identification d'abonné (10) d'au moins un second message de fin d'exécution de ladite commande d'affichage graphique.
